# FASCICULE DE BREVET EUROPEEN

(11) **EP 1 284 085 B1**
(45) Date de publication et mention de la délivrance du brevet: **16.09.2009**
(21) Numéro de dépôt: 01936513.9
(22) Date de dépôt: 15.05.2001
(51) Int. Cl.: H04M 3/533, H04Q 3/00

(54) **NOTIFICATION DE LA PRESENCE DE MESSAGES PROVENANT DE L'ABONNE ACTUELLEMENT APPELE**
BENACHRICHTIGUNG ÜBER VORHANDENE VON DEM MOMENTAN GERUFENEN TEILNEHMER KOMMENDE NACHRICHTEN
NOTIFICATION OF THE PRESENCE OF MESSAGES FROM CURRENTLY CALLED SUBSCRIBER

(30) Priorité: 23.05.2000 FR 0006720
(43) Date de publication de la demande: 19.02.2003
(73) Titulaire: FRANCE TELECOM, 75015 Paris (FR)
(72) Inventeur: CAHAREL, Marie-Hélène, F-35410 Chateaugiron (FR); LOUVET, Olivier, F-22300 Lannion (FR)
(74) Mandataire: Bloch & Bonnétat
(86) Numéro de dépôt international: PCT/FR2001/001463
(87) Numéro de publication internationale: WO 2001/091431

(56) Documents cités:
- EP-A- 0 588 101
- EP-A- 0 689 336
- US-A- 5 905 774

## Description

La présente invention concerne un procédé pour notifier le dépôt d'un message dans une messagerie électronique d'un réseau de télécommunication, tel que le réseau téléphonique commuté ou un réseau de radiotéléphonie, à un usager destinataire du message.

Les serveurs de notification de messages déposés sont actuellement conçus de telle manière que des notifications sont adressées périodiquement, ou bien immédiatement après décrochage dans le terminal d'un premier usager à qui les messages sont destinés, pour lui indiquer qu'il a reçu des messages.

Lorsque le premier usager a reçu un grand nombre de messages, par exemple suite à une longue absence, le service de notification de messages ne lui donne pas la possibilité d'identifier parmi l'ensemble des messages ceux qui ont pour origine un deuxième usager. Le premier usager doit écouter séquentiellement les nouveaux messages qui ont été déposés dans la messagerie pendant son absence jusqu'à ce qu'il parvienne aux messages déposés par le deuxième usager.

Si le premier usager souhaite communiquer rapidement avec le deuxième usager, sans écouter l'ensemble des messages déposés ou en écoutant qu'une partie de ceux-ci, le premier usager téléphonera au deuxième usager en prenant le risque de méconnaître l'information que le deuxième usager lui a transmise dans les messages déposés que le deuxième usager pense avoir été écoutés par le premier usager.

L'objectif de la présente invention est de fournir un procédé pour notifier le dépôt d'un message dans une messagerie permettant au premier usager de savoir directement si le deuxième usager qu'il souhaite appeler lui a laisser un message, et ainsi libérant le premier usager des contraintes de consultation de tous les messages déposés dans la messagerie avant l'établissement de toute communication lorsque le premier usager souhaite correspondre rapidement avec le deuxième usager.

A cette fin, un procédé pour notifier à un premier terminal, fixe ou mobile, un message déposé par un deuxième terminal dans un serveur de messagerie vocale associé au premier terminal, est **caractérisé en ce que,** après une demande pour appeler le deuxième terminal par le premier terminal, il comprend les étapes suivantes :
- transmettre un identificateur du deuxième terminal fourni par le premier terminal au serveur de messagerie vocale,
- rechercher l'identificateur transmis dans une table de nouveaux messages du serveur de messagerie vocale qui fait correspondre des messages non écoutés expédiés par des terminaux et destinés au premier terminal à des identificateurs desdits terminaux,
- notifier au premier terminal par le serveur de messagerie vocale la présence d'un message associé à l'identificateur du deuxième terminal et trouvé dans la table de nouveaux messages,
- transmettre ledit message depuis le serveur de messagerie vocale au premier terminal pour écouter ledit message en réponse à une demande d'écoute de message du premier terminal, et
- notifier au premier terminal par le serveur de messagerie vocale une invitation à confirmer ou infirmer l'établissement de l'appel du deuxième terminal après l'écoute dudit message.

Ainsi, selon l'invention, tout nouveau message déposé dans le serveur de messagerie vocale par l'usager d'un deuxième terminal est systématiquement signalé au premier usager dès un appel du deuxième usager, sans contraindre le premier usager à écouter d'autres nouveaux messages déposés. Toutefois, l'invention n'impose pas l'écoute du ou des nouveaux messages expédiés par le deuxième terminal, puisque le premier usager à la possibilité de refuser l'écoute d'un message et passer alors à l'établissement de l'appel demandé.

Selon des variantes de réalisation de l'invention, l'identificateur du deuxième terminal transmis au serveur de messagerie vocale est fourni par le premier terminal en composant l'identificateur au clavier du premier terminal, ou bien en prononçant l'identificateur devant le premier terminal lorsque le serveur est doté d'un dispositif de reconnaissance vocale.

Selon une réalisation préférée de l'invention, le serveur de messagerie vocale contient un répertoire établi depuis le premier terminal et faisant correspondre des numéros téléphoniques de terminaux à des étiquettes alphanumériques, l'identificateur d'un terminal étant le numéro téléphonique et/ou l'étiquette de ce terminal.

Le répertoire est construit par l'usager du premier terminal de préférence avant toute utilisation du service de l'invention, puis au fur et à mesure des consultations des messages déposés par des nouveaux usagers. Ainsi, après l'étape de transmettre ledit message au premier terminal lorsque l'identificateur du deuxième terminal est le numéro téléphonique de celui-ci et n'est pas inscrit dans le répertoire, le procédé de l'invention comprend les étapes de :
- notifier par le serveur de messagerie vocale au premier terminal une invitation à ajouter une étiquette du deuxième terminal en correspondance au numéro téléphonique dans le répertoire,
- passer à l'étape de notifier l'établissement de l'appel, en réponse à un refus d'ajouter une étiquette du deuxième terminal dans le répertoire par le premier terminal,
- notifier par le serveur de messagerie vocale au premier terminal une demande d'étiquette, en réponse à une confirmation d'adjonction d'étiquette par le premier terminal au serveur de messagerie vocale, et
- transmettre ladite étiquette par le premier terminal au serveur de messagerie vocale et passer à l'étape de notifier l'établissement de l'appel.

Généralement après l'écoute du message trouvé, ou après le refus de l'écoute du message trouvé, le serveur de messagerie vocale transfère le message trouvé avec l'identificateur du deuxième terminal depuis la table de nouveaux messages dans une table d'anciens messages qui pourra être consultée ultérieurement.

En pratique, une réponse du premier terminal à une étape de notifier par le serveur de messagerie vocale est un code à multifréquence, ou bien un message vocal lorsque le serveur de messagerie vocale comprend un dispositif de reconnaissance vocale.

L'invention concerne également un serveur de messagerie vocale pour la mise en oeuvre du procédé de l'invention, relié à un moyen de commutation et d'accès à des services du réseau téléphonique commuté lorsque le premier terminal est un terminal fixe ou d'un réseau de radiotéléphonie lorsque le premier terminal est un terminal radiotéléphonique mobile. Le serveur est **caractérisé en ce qu**'il comprend des moyens pour rechercher, après une demande pour appeler un deuxième terminal par le premier terminal, un identificateur du deuxième terminal fourni par le premier terminal au serveur de messagerie vocale à travers le moyen de commutation et d'accès à des services, dans une table de nouveaux messages du serveur de messagerie vocale qui fait correspondre des messages non écoutés expédiés par des terminaux et destinés au premier terminal à des identificateurs desdits terminaux, et pour transmettre au premier terminal une notification de la présence d'un message associé à l'identificateur du deuxième terminal trouvé dans la table de nouveaux messages.

D'autres caractéristiques et avantages de la présente invention apparaîtront plus clairement à la lecture de la description suivante de plusieurs réalisations préférées de l'invention en référence aux dessins annexés correspondants dans lesquels :
- la figure 1 est un bloc diagramme schématique d'un système de notification de message pour la mise en oeuvre du procédé ;
- la figure 2 est un algorithme des étapes principales d'un procédé de notification de message selon l'invention ; et
- la figure 3 est un algorithme d'étapes supplémentaires du procédé de notification de message selon l'invention, relatives à l'adjonction d'une étiquette d'usager dans un répertoire.

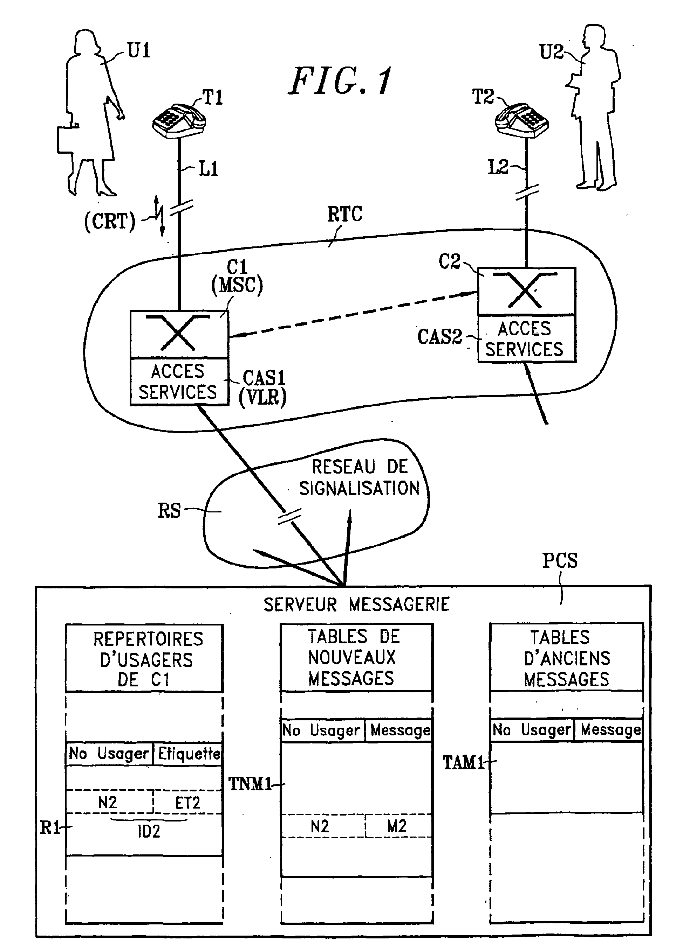

En référence à la figure 1, un système de notification pour la mise en oeuvre du procédé de notification selon l'invention est décrit selon une première réalisation préférée dans le cadre du réseau téléphonique commuté fixe RTC relativement à deux usagers U1 et U2 possédant deux terminaux téléphoniques T1 et T2 respectivement raccordés à des commutateurs à autonomie d'acheminement C1 et C2 à travers des lignes téléphoniques d'usager L1 et L2. En variante, les terminaux T1 et T2 sont rattachés au même commutateur C1. Les lignes téléphoniques L1 et L2 sont constituées classiquement par une paire de fils conducteurs et transmettent des signaux analogiques et particulièrement des messages de notification vocale dans le sens commutateur vers terminal, et des réponses d'usager en code à multifréquence DTMF (Dual Tone MultiFrequency) vers les commutateurs.

Le service de notification offert par l'invention au premier usager U1 est conçu dans le réseau de signalisation RS associé au réseau téléphonique RTC, assurant diverses fonctions liées à divers services offerts aux usagers. Ainsi dans le réseau intelligent, chaque commutateur C1, C2 a une fonctionnalité de service appelée "commutateur d'accès aux services" CAS1, CAS2. Dans une zone géographique, plusieurs commutateurs d'accès aux services sont reliés à travers le réseau de signalisation RS à un serveur de service, dit également point de commande de service PCS.

Le serveur PCS selon la réalisation illustrée à la figure 1 contient au moins des messageries vocales, analogues à des répondeurs/enregistreurs, pour des terminaux d'usager, tel que le terminal d'usager T1, desservis par le commutateur C1. Le serveur de messagerie vocale PCS est doté d'un dispositif de reconnaissance vocale de manière à accepter aussi bien des instructions vocales que des instructions en code DTMF des terminaux d'usager, tels que les terminaux T1 et T2. En variante, le serveur PCS ne comporte pas de dispositif de reconnaissance vocale ou de dispositif de détection de codes DTMF.

Comme il est connu, la messagerie dans le serveur PCS associée au terminal T1 contient deux tables TNM1 et TAM1 faisant correspondre des messages M déposés destinés au terminal T1 à des numéros téléphoniques N de terminaux expéditeurs de ces messages, tels que le deuxième terminal T2. La première table TNM1 concerne les messages déposés récemment qui n'ont pas encore été consultés par l'usager U1 du terminal T1. La deuxième table TAM1 concerne des anciens messages destinés à l'usager U1 qui les a déjà consultés et qui a souhaité les conserver jusqu'à de prochaines consultations ou un effacement manuel ou automatique.

Selon l'invention, les tables de correspondance TNM1 et TAM1 de la messagerie vocale de l'usager U1 sont associées à un répertoire R1 de numéros téléphoniques d'usager N pour l'usager U1 en association avec des étiquettes ET. Par exemple, une étiquette peut être constituée du nom, ou du surnom, ou d'un nom abrégé, ou d'un mot alphanumérique désignant un usager en correspondance avec son numéro téléphonique. Au sens de l'invention, le numéro N, ou l'étiquette ET, ou l'ensemble constitué par le numéro et l'étiquette d'un usager dans le répertoire constitue un identificateur d'usager ID.

Pour la description du procédé de notification selon cette première réalisation de l'invention, il est supposé que le premier usager U1 a souscrit au service de notification selon le procédé de l'invention ; par conséquent une indication de la souscription de l'usager U1 est contenue dans le commutateur d'accès aux services CAS1 rattaché au terminal T1 de manière à déclencher le procédé de l'invention chaque fois que le terminal T1 de l'usager U1 signale une prise de ligne, c'est-à-dire un décrochage dans la ligne L1 au commutateur C1. En réponse à ce décrochage, le commutateur d'accès aux services CAS1 active la consultation de la messagerie associée au terminal T1, en transmettant notamment un numéro d'identification de l'usager U1, par exemple son numéro d'appel téléphonique, afin de sélectionner dans le serveur PCS la messagerie vocale associée au terminal T1.

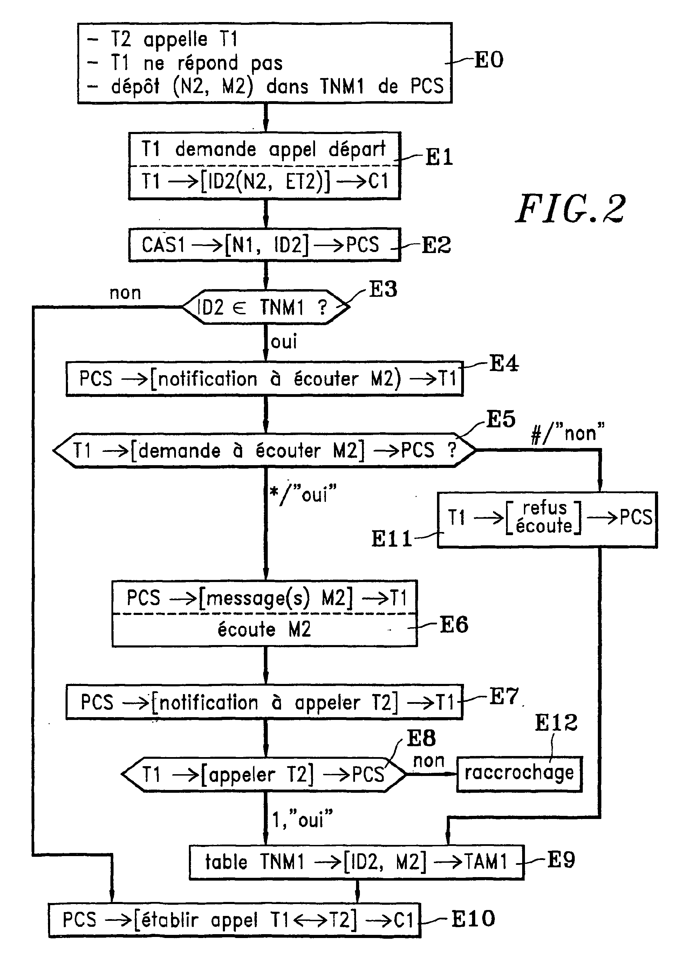

Initialement, à une étape E0, comme montré à la figure 2, l'usager U2 du terminal T2 a appelé le terminal T1, le terminal T1 n'a pas répondu en l'absence de l'usager U1, et la messagerie vocale dans le serveur PCS à inviter l'usager U2 à déposer un message vocal M2 afin de l'enregistrer dans la table de nouveaux messages TNM1 avec le numéro téléphonique N2 du terminal T2 qu'a transmis le commutateur C2 au serveur PCS à travers les commutateurs C1 et CAS1.

Le procédé de notification selon l'invention montré à la figure 2 comprend essentiellement dix étapes E1 à E10.

A une première étape E1, l'usager U1 souhaite appeler l'usager U2. Le terminal T1 prend la ligne L1 suite à une opération de décrochage par l'usager U1, tel que l'appui sur une touche de décrochage ou bien le décrochage proprement dit du combiné du terminal T1. En réponse à cette demande d'appel de départ, le commutateur C1 transmet la tonalité d'invitation à composer au terminal T1 qui transmet l'identificateur ID2 du terminal T2 composé par l'usager U1 au commutateur C1. L'identificateur ID2 peut être le numéro téléphonique N2 de l'usager U2 composé sur le clavier du terminal T1 par l'usager U1, ou bien l'étiquette ET2 du terminal T2, par exemple le nom de l' usager U2, prononcée devant le microphone du terminal T1 par l'usager U1 lorsque cette étiquette ET2 a déjà été inscrite dans le répertoire R1.

Après avoir vérifier que le profil d'abonnement de l'usager U1 contient une indication de souscription au service de notification selon l'invention en réponse à la demande d'appel de départ à l'étape précédente E1, le commutateur CAS1 transmet un message d'activation de la messagerie associée au terminal T1 dans le serveur de messagerie vocale PCS, à une étape E2. Le message d'activation contient le numéro d'appel N1 du terminal T1, en tant qu'adresse de messagerie, et l'identificateur ID2 de l'usager U2 en tant qu'adresse de message enregistré dans la messagerie.

Le serveur de messagerie vocale PCS recherche à l'étape E3 tout message M2 qui a été enregistré dans la table TNM1 en association avec l'identificateur ID2 du terminal T2. Cette recherche est effectuée en comparant l'identificateur reçu ID2 avec les identificateurs contenus dans la table de nouveaux messages TNM1 associée au terminal T1, le cas échéant à travers une consultation du répertoire R1 si l'identificateur ID2 est l'étiquette ET2. Si aucun message n'a été déposé par l'usager U2, le procédé est poursuivi par la dernière étape E10 consistant à retirer l'intervention de la fonctionnalité d'accès aux services CAS1 dans le commutateur C1 pour l'établissement de l'appel de départ et ainsi à poursuivre l'établissement de l'appel de départ entre les commutateurs C1 et C2.

Dans le cas contraire, lorsqu'un message M2 a été trouvé dans la table de nouveaux messages TNM1, le serveur de messagerie vocale PCS adresse une notification à écouter le message M2 au terminal T1 via les commutateurs CAS1, C1 à l'étape E4. La notification à écouter le message est par exemple le message vocal suivant : "votre messagerie contient un message correspondant à N2" lorsque le numéro N2 a été composé à l'étape E1, ou bien "ET2 vous a déposé un message" lorsque l'étiquette ET2 a été prononcée par l'usager U1 à l'étape E1. La notification a écouter à l'étape E4 est suivie du complément "si vous souhaitez l'écouter, appuyer sur la touche étoile, ou si vous préférez lancer directement l'appel appuyer sur la touche dièse", lorsque la messagerie dans le serveur PCS n'est pas dotée d'un dispositif de reconnaissance vocale. Le complément est plutôt le suivant "si vous souhaitez l'écouter, dites OUI, ou si vous préférez lancer directement l'appel dites NON", ou bien une combinaison des deux compléments est transmise, lorsque le serveur PCS est doté d'un dispositif de reconnaissance vocale.

A l'étape suivante E11, si le terminal T1 a transmis un message de refus d'écoute au serveur PCS à la suite de la sollicitation de la touche # du clavier du terminal T1 ou bien de la prononciation du mot "NON", le procédé se poursuit par l'étape E9 décrite plus loin.

En réponse à la sollicitation de la touche * ou de la prononciation du mot "OUI" à l'étape E5, le serveur PCS émet à l'étape suivante E6 le message M2 vers le terminal T1 lu dans la table de nouveaux messages TNM1 en correspondance avec l'identificateur ID2 transmis à l'étape E2. Si plusieurs messages M2 de l'usager U2 ont été enregistrés dans la table TNM1 du serveur PCS associée à l'usager U1, l'usager U1 sollicite par une commande "Suivant" associée à une touche prédéterminée du clavier du terminal T1 la consultation des messages successifs M2.

Après consultation du ou des messages M2, le serveur de messagerie vocale PCS transmet une notification à appeler le terminal T2 au terminal T1, à l'étape E7, afin que le terminal T1 confirme ou infirme l'établissement de l'appel avec le terminal T2. Cette deuxième notification peut être par exemple le message vocal "pour confirmer l'appel vers T2, composer le 1" et/ou "ou dites OUI" selon que la messagerie dans le serveur PCS n'est pas dotée ou dotée d'un dispositif de reconnaissance vocale. Si à l'étape E8, l'usager U1 ne souhaite pas appeler l'usager U2 à la suite de l'écoute du ou des messages M2, il raccroche son combiné ou sollicite une touche de raccrochage du clavier du terminal T1 qui libère la ligne L1 à l'étape E12.

Dans le cas contraire, le terminal T1 confirme l'appel du terminal T2 au serveur PCS à la suite de la sollicitation de la touche 1 ou de l'émission du mot "OUI", à l'étape E8. A la suite de l'étape E8 ou de l'étape E11, le ou les messages M2 qui viennent d'être consultés dans la table de nouveaux messages TNM1 sont transférés avec le numéro téléphonique N2 du terminal T2 dans la table d'anciens messages TAM1 à l'étape E9.

Finalement, le serveur PCS confirme l'établissement de l'appel de départ entre les terminaux T1 et T2 au commutateur C1 à l'étape E10, en éliminant l'intervention du commutateur CAS1 dans la suite du déroulement de l'appel, à l'étape E10.

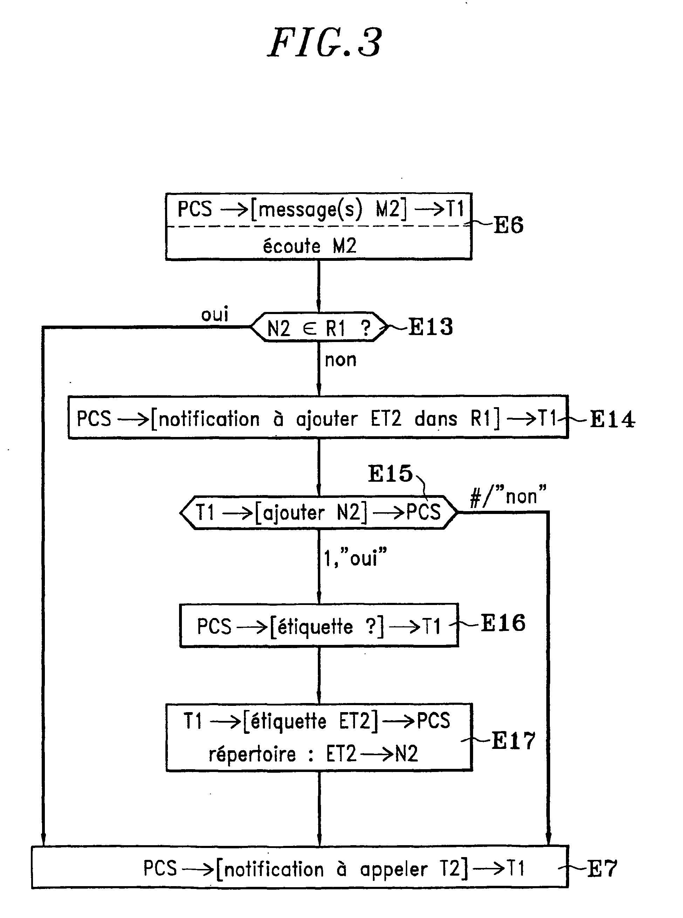

Selon une réalisation plus complète et en référence à la figure 3, le procédé de notification comprend en outre des étapes E13 à E17 entre les étapes E6 et E7. Après l'écoute du ou des messages M2 à l'étape E6, ces étapes supplémentaires consistent à compléter le répertoire R1 de l'usager U1 lorsque, à une étape initiale E13, le serveur PCS constate que le numéro téléphonique N2 du deuxième terminal T2 constituant l'identificateur ID2 fourni par le premier terminal T1 au serveur PCS à l'étape E2 et correspondant à au moins un nouveau message M2 qui vient d'être écouté à l'étape E6 n'est pas encore inscrit dans le répertoire R1. Sinon, le répertoire n'est pas modifié (étape E13, oui) et l'étape E7 est exécutée.

Après l'étape E13, le serveur PCS transmet au terminal T1 une notification d'invitation à ajouter l'étiquette ET2 en correspondance avec le numéro téléphonique N2 dans le répertoire R1 à l'étape E14. Cette notification peut être la suivante : "si vous souhaitez intégrer cet usager dans votre répertoire, composer le 1, ou dans le cas contraire appuyer sur la touche #" lorsque le serveur PCS ne contient pas de dispositif de reconnaissance vocale, ou bien "si vous souhaitez intégrer ce numéro dans votre répertoire, dites OUI, ou dans le cas contraire dites NON" lorsque le serveur PCS contient un dispositif de reconnaissance vocale.

En réponse à une confirmation d'adjonction d'étiquette sous la forme du code DTMF "1" ou au mot "OUI" à l'étape E15, le serveur PCS transmet une autre notification au terminal T1 pour demander "quelle étiquette est à associer au numéro d'appel N2", à l'étape E16. L'usager U1 compose l'étiquette ET2 sur le clavier du terminal T1 ou bien prononce l'étiquette ET2 devant le microphone du terminal T1 lorsque le serveur PCS lui a déjà signalé qu'.il était doté d'un dispositif de reconnaissance vocale par une invitation à prononcer le mot "OUI" ou "NON" notamment à l'étape précédente E13. Ainsi à l'étape E17, l'étiquette ET2 est transmise depuis le terminal T1 au serveur PCS pour l'enregistrer dans le répertoire R1 en association avec le numéro téléphonique N2. Il est rappelé que l'étiquette ET2 peut être le nom, ou un surnom, ou un numéro abrégé ou tout autre mot alphanumérique de l'usager U2.

Puis après l'étape E17, ou bien après l'étape E15 lorsque l'usager a sollicité la touche # ou a dit "NON", le procédé passe à l'étape E7 déjà décrite en référence à la figure 2.

Selon une deuxième réalisation pour laquelle les repères sont indiqués entre parenthèses dans la figure 1, le terminal T1 est un terminal radiotéléphonique mobile qui est relié à une station de base d'un réseau de radiotéléphonie à travers un canal radioélectrique de trafic CRT, remplaçant la ligne L1. L'équivalent du commutateur C1 dans le réseau RTC est alors le commutateur du service mobile MSC desservant la station de base précitée et auquel est rattaché temporairement le terminal radiotéléphonique. Dans le réseau fixe du réseau de radiotéléphonie, on y retrouve une fonctionnalité d'accès à des services en équivalence avec le commutateur CAS1 et associé au couple du commutateur du service mobile MSC et de l'enregistreur de localisation des visiteurs VLR associé à ce dernier et contenant le profil d'abonnement des terminaux mobiles dans sa zone de localisation, ainsi qu'au moins un serveur de messagerie équivalent au serveur PCS et relié à plusieurs commutateurs du service mobile MSC à travers le réseau de signalisation du réseau de radiotéléphonie. L'adresse du serveur de messagerie vocale PCS associé au terminal mobile T1 est incluse dans le profil d'abonnement mémorisé temporairement dans l'enregistreur VLR et en permanence dans l'enregistreur de localisation nominal HLR du réseau de radiotéléphonie.

Par conséquent, à l'exception de l'inversion des fonctions à l'étape E1 au cours de laquelle l'identificateur ID2 est d'abord composé dans le terminal radiotéléphonique mobile T1, puis l'appel de départ par sollicitation de touche de décrochage/prise de canal de trafic est ensuite demandé par le terminal T1, le procédé E0 à E17 tel que décrit ci-dessus pour des terminaux fixes dans le réseau téléphonique commuté RTC est également applicable à des terminaux radiotéléphoniques mobiles dans un réseau de radiotéléphonie.

La portée de l'invention est indépendante du caractère fixe ou mobile des terminaux d'usager : les terminaux T1 et T2 peuvent être tous les deux des terminaux fixes ou des terminaux mobiles, ou l'un d'eux peut être un terminal fixe et l'autre un terminal mobile.

## Revendications

1. Procédé pour notifier à un premier terminal (T1) un message (M2) déposé par un deuxième terminal (T2) dans un serveur de messagerie vocale (PCS) associé au premier terminal, **caractérisé en ce que,** après une demande (E1) pour appeler le deuxième terminal (T2) par le premier terminal (T1), il comprend les étapes suivantes :
- transmettre (E2) un identificateur (ID2) du deuxième terminal (T2) fourni par le premier terminal au serveur de messagerie vocale (PCS),
- rechercher (E3) l'identificateur transmis (ID2) dans une table de nouveaux messages (TNM1) du serveur de messagerie vocale (PCS) qui fait correspondre des messages non écoutés expédiés par des terminaux et destinés au premier terminal (T1) à des identificateurs desdits terminaux,
- notifier (E4) au premier terminal (T1) par le serveur de messagerie vocale (PCS) la présence d'un message associé à l'identificateur (ID2) du deuxième terminal (T2) et trouvé dans la table de nouveaux messages (TNM1),
- transmettre (E6) ledit message (M2) depuis le serveur de messagerie vocale (PCS) au premier terminal (T1) pour écouter ledit message en réponse à une demande d'écoute de message (E5) du premier terminal, et
- notifier (E7) au premier terminal (T1) par le serveur de messagerie vocale (PCS) une invitation à confirmer (E8) ou infirmer (E12) l'établissement de l'appel du deuxième terminal (T2) après l'écoute dudit message (M2).

2. Procédé conforme à la revendication 1, selon lequel l'identificateur (ID2) du deuxième terminal (T2) transmis (E2) au serveur de messagerie vocale (PCS) est fourni par le premier terminal (T1) en composant l'identificateur au clavier du premier terminal, ou bien en prononçant l'identificateur devant le premier terminal.

3. Procédé conforme à la revendication 1 ou 2, selon lequel le serveur de messagerie vocale (PCS) contient un répertoire (R1) établi depuis le premier terminal (T1) et faisant correspondre des numéros téléphoniques (N2) de terminaux (T2) à des étiquettes alphanumériques (ET2), l'identificateur (ID2) d'un terminal étant le numéro téléphonique et/ou l'étiquette de ce terminal.

4. Procédé conforme à la revendication 3, comprenant en outre les étapes suivantes après l'étape (E6) de transmettre ledit message (M2) au premier terminal (T1) lorsque l'identificateur (ID2) du deuxième terminal (T2) est le numéro téléphonique (N2) de celui-ci et n'est pas inscrit (E13, NON) dans le répertoire (R1) :
- notifier (E14) par le serveur de messagerie vocale (PCS) au premier terminal (T1) une invitation à ajouter une étiquette (ET2) du deuxième terminal (T2) en correspondance au numéro téléphonique (N2) dans le répertoire (R1),
- passer (E15, NON) à l'étape de notifier (E7) l'établissement de l'appel, en réponse à un refus d'ajouter une étiquette du deuxième terminal dans le répertoire par le premier terminal (T1),
- notifier (E16) par le serveur de messagerie vocale (PCS) au premier terminal (T1) une demande d'étiquette (ET2), en réponse à une confirmation d'adjonction d'étiquette (E15, OUI) par le premier terminal (T1) au serveur de messagerie vocale (PCS), et
- transmettre (E17) ladite étiquette (ET2) par le premier terminal (T1) au serveur de messagerie vocale (PCS) et passer à l'étape de notifier (E7) l'établissement de l'appel.

5. Procédé conforme à l'une quelconque des revendications 1 à 4, comprenant dans le serveur de messagerie vocale (PCS) un transfert (E9) du message trouvé (M2) avec l'identificateur (ID2) du deuxième terminal (T2) depuis la table de nouveaux messages (TNM1) dans une table d'anciens messages (TAM1).

6. Procédé conforme à l'une quelconque des revendications 1 à 5, selon lequel une réponse (E5, E8, E14, E16) du premier terminal (T1) à une étape de notifier (E4, E7, E13, E15) par le serveur de messagerie vocale (PCS) est un code à multifréquence, ou un message vocal.

7. Serveur de messagerie vocale (PCS) relié à un moyen de commutation et d'accès à des services (C1, MSC, CAS1, VLR) du réseau téléphonique commuté (RTC) lorsque le premier terminal (T1) est un terminal fixe ou d'un réseau de radiotéléphonie lorsque le premier terminal (T1) est un terminal radiotéléphonique mobile, **caractérisé en ce qu'**il comprend des moyens (TNM1) pour rechercher, après une demande (E1) pour appeler un deuxième terminal (T2) par le premier terminal (T1), un identificateur (ID2) du deuxième terminal (T2) fourni par le premier terminal au serveur de messagerie vocale (PCS) à travers le moyen de communication et d'accès à des services (C1, MSC, CAS1, VLR), dans une table de nouveaux messages (TNM1) du serveur de messagerie vocale (PCS) qui fait correspondre des messages non écoutés expédiés par des terminaux et destinés au premier terminal (T1) à des identificateurs desdits terminaux, pour transmettre au premier terminal (T1) une notification (E4) de la présence d'un message associé à l'identificateur (ID2) du deuxième terminal (T2) trouvé dans la table de nouveaux messages (TNM1), pour transmettre (E6) ledit message (M2) au premier terminal (T1) pour écouter ledit message en réponse à une demande d'écoute de message (E5) du premier terminal, et pour notifier (E7) au premier terminal (T1) une invitation à confirmer (E8) ou infirmer (E12) l'établissement de l'appel du deuxième terminal (T2) après l'écoute dudit message (M2).

8. Serveur de messagerie vocale conforme à la revendication 7, **caractérisé en ce qu'**il comprend un répertoire (R1) faisant correspondre des numéros téléphoniques (N2) de deuxièmes terminaux (T2) à des étiquettes alphanumériques (ET2), et établi depuis le premier terminal (T1).

## Claims

1. Method of notifying a first terminal (T1) of a message (M2) deposited by a second terminal (T2) in a voicemail server (PCS) associated with the first terminal, **characterized in that,** after a request (E1) to call the second terminal (T2) by the first terminal (T1), the method includes the following steps:
- sending (E2) the voicemail server (PCS) an identifier (ID2) of the second terminal (T2) supplied by the first terminal,
- looking for (E3) the identifier (ID2) that has been sent in a new messages table (TNM1) of the voicemail server (PCS) that establishes the correspondence between identifiers of terminals and messages sent to the first terminal (T1) by said terminals that have not been listened to,
- the voicemail server (PCS) notifying (E4) the first terminal (T1) of the presence of a message with the associated identifier (ID2) of the second terminal (T2) in the new messages table (TNM1),
- the voicemail server (PCS) sending (E6) said message (M2) to the first terminal (T1) in response to a request (E5) to listen to the message from the first terminal, in order for said message to be listened to, and
- the voicemail server (PCS) notifying (E7) the first terminal (T1) of an invitation to confirm (E8) or cancel (E12) the setting up of the call from the second terminal (T2) after listening to said message (M2).

2. Method according to Claim 1, wherein the identifier (ID2) of the second terminal (T2) sent (E2) to the voicemail server (PCS) is provided by the user of first terminal (T1) by entering the identifier on the keypad of the first terminal or by speaking the identifier into the first terminal.

3. Method according to Claim 1 or Claim 2, wherein the voicemail server (PCS) contains a directory (R1) set up via the first terminal (T1) and establishing the correspondence between telephone numbers (N2) of terminals (T2) and alphanumeric labels (ET2) and the identifier (ID2) of a terminal is the telephone number and/or the label of that terminal.

4. Method according to Claim 3, further including the following steps after the step (E6) of sending said message (M2) to the first terminal (T1) when the identifier (ID2) of the second terminal (T2) is the telephone number (N2) of the latter and is not included (E13, NO) in the directory (R1) :
- the voicemail server (PCS) notifying (E14) the first terminal (T1) of an invitation to add to the directory (R1) a label (ET2) of the second terminal (T2) with the corresponding telephone number (N2),
- proceeding (E15, NO) to the step (E7) of notifying the setting up of the call, in response to the first terminal (T1) declining to add a label of the second terminal to the directory,
- the voicemail server (PCS) notifying (E16) the first terminal (T1) of a label (ET2) request, in response to the first terminal (T1) confirming to the voicemail server (PCS) addition of the label (E15, YES), and
- the first terminal (T1) sending (E17) said label (ET2) to the voicemail server (PCS) and proceeding to the step (E7) of notifying call set-up.

5. Method according to any of Claims 1 to 4, including, in the voicemail server (PCS), transferring (E9) the message (M2) found with the identifier (ID2) of the second terminal (T2) from the new messages table (TNM1) to an old messages table (TAM1).

6. Method according to any of Claims 1 to 5, wherein a response (E5, E8, E14, E16) from the first terminal (T1) to a step (E4, E7, E13, E15) of notification by the voicemail server (PCS) is a DTMF code or a voice message.

7. Voicemail server (PCS) connected to switching and service access means (C1, MSC, CAS1, VLR) of a public switched telephone network (RTC) if a first terminal (T1) is a fixed terminal or a mobile telephone network if the first terminal (T1) is a mobile telephone, **characterized in that** it includes means (TNM1) for looking for an identifier (ID2) of the second terminal (T2) provided by the first terminal to the voicemail server (PCS) via the switching and service access means (C1, MSC, CAS1, VLR) in a new messages table (TNM1) of the voicemail server (PCS) that establishes the correspondence between messages, sent by terminals to the first terminal (T1) with identifiers of said terminals, that have not been listened to, following a request (E1) by the first terminal (T1) to call a second terminal (T2), for sending the first terminal (T1) a notification (E4) of the presence in the new messages table (TNM1) of a message associated with the identifier (ID2) of the second terminal (T2), for sending (E6) said message (M2) to the first terminal (T1) for listening to said message in response to a request (E5) to listen to a message from the first terminal, and for notifying (E7) the first terminal (T1) of an invitation to confirm (E8) or deny (E12) the establishing of the call of the second terminal (T2) after listening to said message (M2).

8. Voicemail server according to Claim 7, **characterized in that** it includes a directory (R1) set up via the first terminal (T1) for establishing the correspondence between telephone numbers (N2) and alphanumeric labels (ET2) of the second terminals (T2).

## Patentansprüche

1. Verfahren zur Benachrichtigung eines ersten Endgeräts (T1) über eine Mitteilung (M2), die von einem zweiten Endgerät (T2) in einem dem ersten Endgerät zugeordneten Voice-Mail-Server (PCS) hinterlegt wurde, **dadurch gekennzeichnet, dass** es nach einer Anforderung (E1) zum Anrufen des zweiten Endgeräts (T2) durch das erste Endgerät (T1) die folgenden Schritte aufweist:
- Übertragung (E2) einer vom ersten Endgerät gelieferten Kennung (ID2) des zweiten Endgeräts (T2) an den Voice-Mail-Server (PCS),
- Suche (E3) der übertragenen Kennung (ID2) in einem Verzeichnis neuer Mitteilungen (TNM1) des Voice-Mail-Servers (PCS), das nicht abgehörte Mitteilungen, die von Endgeräten geschickt und für das erste Endgerät (T1) bestimmt sind, mit Kennungen der Endgeräte in Übereinstimmung bringt,
- Benachrichtigung (E4) des ersten Endgeräts (T1) durch den Voice-Mail-Server (PCS) über das Vorhandensein einer der Kennung (ID2) des zweiten Endgeräts (T2) zugeordneten und im Verzeichnis neuer Mitteilungen (TNM1) gefundenen Mitteilung,
- Übertragung (E6) der Mitteilung (M2) ausgehend vom Voice-Mail-Server (PCS) an das erste Endgerät (T1), um die Mitteilung als Reaktion auf eine Mitteilungsabhöranforderung (E5) des ersten Endgeräts abzuhören, und
- Benachrichtigung (E7) des ersten Endgeräts (T1) durch den Voice-Mail-Server (PCS) über eine Aufforderung zur Bestätigung (E8) oder zur Ungültigmachung (E12) des Aufbaus des Anrufs des zweiten Endgeräts (T2) nach dem Abhören der Mitteilung (M2).

2. Verfahren nach Anspruch 1, gemäß dem die an den Voice-Mail-Server (PCS) übertragene (E2) Kennung (ID2) des zweiten Endgeräts (T2) vom ersten Endgerät (T1) geliefert wird, indem die Kennung auf der Tastatur des ersten Endgeräts eingegeben wird, oder indem die Kennung vor dem ersten Endgerät ausgesprochen wird.

3. Verfahren nach Anspruch 1 oder 2, gemäß dem der Voice-Mail-Server (PCS) ein Adressbuch (R1) enthält, das ausgehend vom ersten Endgerät (T1) erstellt wird und Telefonnummern (N2) von Endgeräten (T2) mit alphanumerischen Kennsätzen (ET2) in Übereinstimmung bringt, wobei die Kennung (ID2) eines Endgeräts die Telefonnummer und/oder der Kennsatz dieses Endgeräts ist.

4. Verfahren nach Anspruch 3, das außerdem nach dem Schritt (E6) der Übertragung der Mitteilung (M2) an das erste Endgerät (T1) die folgenden Schritte enthält, wenn die Kennung (ID2) des zweiten Endgeräts (T2) dessen Telefonnummer (N2) und nicht in das Adressbuch (R1) eingetragen ist (E13, NON):
- Benachrichtigung, durch den Voice-Mail-Server (PCS), des ersten Endgeräts (T1) über eine Aufforderung (E14), einen Kennsatz (ET2) des zweiten Endgeräts (T2) entsprechend der Telefonnummer (N2) im Adressbuch (R1) hinzuzufügen,
- Übergang (E15, NEIN) zum Schritt der Benachrichtigung (E7) über den Aufbau des Anrufs als Reaktion auf eine Weigerung des ersten Endgeräts (T1), einen Kennsatz des zweiten Endgeräts in das Adressbuch hinzuzufügen,
- Benachrichtigung (E16) durch den Voice-Mail-Server (PCS) an das erste Endgerät (T1) über eine Kennsatzanforderung (ET2) als Reaktion auf eine Bestätigung einer Kennsatzhinzufügung (E15, JA) durch das erste Endgerät (T1) an den Voice-Mail-Server (PCS), und
- Übertragung (E17) des Kennsatzes (ET2) durch das erste Endgerät (T1) an den Voice-Mail-Server (PCS) und Übergang zum Schritt der Benachrichtigung (E7) über den Aufbau des Anrufs.

5. Verfahren nach einem der Ansprüche 1 bis 4, das im Voice-Mail-Server (PCS) eine Übertragung (E9) der gefundenen Mitteilung (M2) mit der Kennung (ID2) des zweiten Endgeräts (T2) ausgehend vom Verzeichnis neuer Mitteilungen (TNM1) in ein Verzeichnis alter Mitteilungen (TAM1) enthält.

6. Verfahren nach einem der Ansprüche 1 bis 5, gemäß dem eine Reaktion (E5, E8, E14, E16) des ersten Endgeräts (T1) auf einen Schritt der Benachrichtigung (E4, E7, E13, E15) durch den Voice-Mail-Server (PCS) ein Mehrfrequenzcode oder eine gesprochene Mitteilung ist.

7. Voice-Mail-Server (PCS), der mit einer Einrichtung zur Vermittlung und zum Zugriff auf Dienste (C1, MSC, CAS1, VLR) des Telefonwählnetzes (RTC), wenn das erste Endgerät (T1) ein ortsfestes Endgerät ist, oder eines Sprechfunknetzes, wenn das erste Endgerät (T1) ein Mobilfunk-Endgerät ist, verbunden ist, **dadurch gekennzeichnet, dass** er Einrichtungen (TNM1) aufweist, um nach einer Anforderung (E1) zum Anrufen eines zweiten Endgeräts (T2) durch das erste Endgerät (T1) eine Kennung (ID2) des zweiten Endgeräts (T2), die vom ersten Endgerät an den Voice-Mail-Server (PCS) über die Einrichtung zur Vermittlung und zum Zugriff auf Dienste (C1, MSC, CAS1, VLR) geliefert wird, in einem Verzeichnis neuer Mitteilungen (TNM1) des Voice-Mail-Servers (PCS) zu suchen, das von Endgeräten abgeschickte und für das erste Endgerät (T1) bestimmte, nicht abgehörte Mitteilungen mit Kennungen der Endgeräte in Übereinstimmung bringt, um an das erste Endgerät (T1) eine Benachrichtigung (E4) über das Vorhandensein einer der Kennung (ID2) des zweiten Endgeräts (T2) zugeordneten Mitteilung zu übertragen, die in dem Verzeichnis neuer Mitteilungen (TNM1) gefunden wurde, um die Mitteilung (M2) an das erste Endgerät (T1) zu übertragen ((E6), um die Mitteilung als Reaktion auf eine Mitteilungsabhöranforderung (E5) des ersten Endgeräts abzuhören, und um das erste Endgerät (T1) über eine Aufforderung zur Bestätigung (E8) oder zur Ungültigmachung (E12) des Aufbaus des Anrufs des zweiten Endgeräts (T2) nach dem Abhören der Mitteilung (M2) zu benachrichtigen (E7).

8. Voice-Mail-Server nach Anspruch 7, **dadurch gekennzeichnet, dass** er ein Adressbuch (R1) enthält, das Telefonnummern (N2) zweiter Endgeräte (T2) mit alphanumerischen Kennsätzen (ET2) in Übereinstimmung bringt, und das ausgehend vom ersten Endgerät (T1) aufgebaut wird.
